Europäisches Patentamt

European Patent Office

Office européen des brevets

(19)

(11) **EP 0 796 285 B1**

(12) **EUROPÄISCHE PATENTSCHRIFT**

(45) Veröffentlichungstag und Bekanntmachung des Hinweises auf die Patenterteilung:
**24.03.1999 Patentblatt 1999/12**

(21) Anmeldenummer: **95941630.6**

(22) Anmeldetag: **29.11.1995**

(51) Int Cl.6: **C08F 12/08**, C08F 2/08

(86) Internationale Anmeldenummer:
**PCT/EP95/04679**

(87) Internationale Veröffentlichungsnummer:
**WO 96/18664 (20.06.1996 Gazette 1996/28)**

(54) **VERFAHREN ZUR HERSTELLUNG VON POLYSTYROL DURCH ANIONISCHE POLYMERISATION**

PROCESS FOR PRODUCING POLYSTYRENE BY ANIONIC POLYMERISATION

PROCEDE DE PRODUCTION DE POLYSTYRENE PAR POLYMERISATION ANIONIQUE

(84) Benannte Vertragsstaaten:
**BE DE ES FR GB IT NL**

(30) Priorität: **10.12.1994 DE 4444016**

(43) Veröffentlichungstag der Anmeldung:
**24.09.1997 Patentblatt 1997/39**

(73) Patentinhaber: **BASF AKTIENGESELLSCHAFT 67056 Ludwigshafen (DE)**

(72) Erfinder:
• **WÜNSCH, Josef
  D-67105 Schifferstadt (DE)**
• **GAUSEPOHL, Hermann
  D-67112 Mutterstadt (DE)**
• **ALTSTÄDT, Volker
  D-64579 Gernsheim (DE)**

(56) Entgegenhaltungen:
  **EP-A- 0 323 133          EP-A- 0 530 796
  FR-A- 2 137 676          US-A- 4 423 160
  US-A- 4 839 418          US-A- 4 942 209**

• **CHEMICAL ABSTRACTS, vol. 82, no. 12, 24. März 1975 Columbus, Ohio, US; abstract no. 73697k, 'STYRENE POLYMERS' Seite 17; Spalte 2; & JP,A,74 020 945 (KANEGAFUCHI CHEMICAL INDUSTRY CO., LTD.) 28. Mai 1974**

**Beschreibung**

Die Erfindung betrifft ein Verfahren zur Herstellung von Polystyrol durch anionische Polymerisation.

Es ist bekannt, daß durch anionische Polymerisation theoretisch Polystyrol hoher Einheitlichkeit und hohen Molgewichts erhalten werden kann. Allerdings läßt sich hohe Einheitlichkeit, d.h. eine enge Molgewichtsverteilung (ausgedrückt z.B. durch die Uneinheitlichkeit, das Verhältnis $M_w/M_n$ des Gewichts- bzw. zahlenmittels des MG) nur unter Bedingungen erzielen, die selbst im Laboratorium nur schwer zu verwirklichen sind, nämlich gleichzeitigen Start und gleichzeitigen Abbruch aller wachsenden Polymerketten. Dies gilt unabhängig vom beabsichtigten Molekulargewicht. Praktisch nimmt aber bei der Herstellung von besonders hochmolekularem Polystyrol die Uneinheitlichkeit mit steigendem Molekulargewicht weiter zu, weil die vorstehenden Bedingungen technisch nicht eingehalten werden können.

An sich wäre hohe Einheitlichkeit und besonders hohes Molekulargewicht für hochwertiges Polystyrol wünschenswert, weil gewöhnliches Polystyrol nur geringe Bruchfestigkeit besitzt. Polystyrol hoher Einheitlichkeit und hohen Molekulargewichts besitzt demgegenüber deutlich erhöhte Bruchzähigkeit ($K_{IC}$; kritischer Spannungsintensitätsfaktor) und höhere Bruchenergie ($G_{IC}$; kritische Energiefreisetzungsrate) sowie deutlich besseres Ermüdungsverhalten. In einem Ermüdungsrißausbreitungsdiagramm zeichnet sich hochmolekulares Polystyrol durch einen höheren Grenzwert der Amplitude des Spannungsintensitätsfaktors aus, bis zu der kein Rißwachstum meßbar ist (Rißausbreitungsgeschwindigkeit da/dn < $10^{-6}$ mm/Schwingspiel). Ferner ist die Steigung der Rißausbrei-tungskurve in ihrem stabilen Bereich geringer und der Bereich hoher Rißausbreitungsgeschwindigkeit (da/dn < $10^{-3}$ mm/Schwingspiel) ist zu höheren Amplituden der Spannungsintensität verschoben. Insgesamt ist der Verlauf der Ermüdungsrißausbreitungskurve in doppelt logarithmischer Darstellung gegenüber Standard-polystyrol deutlich nach rechts verschoben.

Es besteht daher Bedarf für ein Verfahren zur anionischen Polymerisation von Styrol in technischem Maßstab, das Polystyrol hoher Einheitlichkeit und besonders hohen Molekulargewichts in technischem Maßstab herzustellen erlaubt.

Es ist bekannt, hochmolekulare Vinylverbindungen wie Polystyrol in nichtwäßriger Dispersion herzustellen (US-PS-3,645,959). Ferner ist bekannt, hochmolekulares Polystyrol mit einer Uneinheitlichkeit $M_w/M_n$ unter 8 durch kationische Polymerisation herzustellen (US-PS-4,112,209). Allgemein ist die anionische Dispersionspolymerisation z.B. in den folgenden Druckschriften beschrieben: US-PS-4,942,209, US-PS-4,829,135, US-PS-4,871,814, ZA 72/7635 und EP-PS 290 195.

Die EP 0 530 796 A1 beschreibt ein Verfahren zur Herstellung von statistischen Styrol/Butadien-Copolymerisaten (d.h. SB-Kautschuken; SBR) in Form einer Dispersion in einem Kohlenwasserstoff, bei dem als Dispergierhilfsmittel ein Styrol-Butadien-Blockcopolymerisat verwendet wurde. Über die Aufgabe, besonders hochmolekulares Polystyrol mit einer besonders geringen Breite der Molekulargewichtsverteilung, das sich z.B. zur Herstellung von mechanisch besonders hochwertigem Standard-Polystyrol eignet, läßt sich den Angaben in dieser Druckschrift jedoch nichts entnehmen.

Es wurde nun gefunden, daß das vorstehende Problem gelöst und hochmolekulares Polystyrol mit einer geringen Uneinheitlichkeit durch anionische Dispersionspolymerisation in einem aliphatischen Kohlenwasserstoff als Dispergiermittel erhalten werden kann, wenn als Dispergierhilfsmittel ein Styrol-Butadien-Blockcopolymer verwendet wird.

Geeignete Styrol-Butadien-Blockcopolymere sind z.B. Zweiblockcopolymere des Typs A-B, wobei A einen Polymerblock aus Styrol und B einen Polymerblock aus Butadien, bevorzugt 1,4-Polybutadien, bedeutet. Die Summe der Komponenten A und B beträgt 100 %, wobei die Zusammensetzung von A und B variieren kann. So kann A von 10 bis 90 % und entsprechend B von 90 bis 10 %, bevorzugt aber A zwischen 20 und 80 % und B zwischen 80 bis 20 % liegen kann.

Geeignet sind z.B. die Handelsprodukte ®Nippon NS 312, ®Buna KA 8497, ®Kraton G 1701X und ®Septon 1001.

Geeignete aliphatische Kohlenwasserstoffe sind z.B. Alkane mit 3 bis 20 C-Atomen.

Ein besonders geeignetes Styrol-Butadien-Blockcopolymer ist z.B. ein Styrol-Butadien-Zweiblockcopolymer, das hydriert sein kann und das in einer Menge von z.B. 1 bis 10 Gew.% bezogen auf das Monomere (Styrol) verwendet wird. Zweckmäßig wird es der zu polymerisierenden Dispersion gelöst im Monomeren zugesetzt.

Als Dispergiermittel eignet sich Pentan, das besonders leicht wieder entfernt werden kann, da die Polymerisationstemperatur relativ niedrig ist, z.B. 50 bis -100°C.

Praktisch geht man so vor, daß man z.B. Pentan bei Raumtemperatur oder etwas darüber (etwa 30°C) vorlegt und das mit dem Styrol-Butadien-Blockcopolymer versetzte Styrol zugibt. Die Mischung wird mit dem vorgesehenen Initiator (vgl. die vorstehenden Literaturangaben), der z.B. Butyllithium sein kann, zunächst in üblicher Weise austitriert und dann die berechnete Menge an Initiator zugesetzt. Durch Entfernen des Pentans kann das Polymere gewonnen werden. Das Dispergierhilfsmittel kann im Polymeren verbleiben und hat allenfalls günstige Wirkung auf das mechanische Verhalten des Polystyrols.

Das Molekulargewicht des erfindungsgemäß hergestellten Polystyrols soll oberhalb von 1,000,000, bevorzugt oberhalb 1,200,000 liegen.

Die in den nachstehenden Beispielen enthaltenen Angaben über Molekulargewichte und M.G.-Verteilung wurden gelpermeationschromatiographisch ermittelt.

Meßbedingungen

| Stationäre Phase | 5 MIXED B-Polystyrolgelsäulen (7,5 x 300 mm, PL-gel 10 μ) der Fa. Polymer Laboratories (Temperierung: 35°C) |
|---|---|
| Mobile Phase | THF (Fluß: 1,2 ml/min) |
| Eichung | MG 500 - 10 000 000 g/mol mit PS-Eichkit der Fa. Polymer Laboratories |
| Detektion | RI (Brechungsindex) Waters 410 UV (bei 254 nm) Spectra Physics 100 |

Beispiel 1

25 g eines handelsüblichen SB-Zweiblockcopolymers (Nippon NS 312 der Fa. Nippon Zeon) wurden unter Inertgas in 1000 g Styrol gelöst und in 1859 g n-Hexan eingerührt. Alle Verunreinigungen wurden mit sec.-Butyllithium austitriert und die Polymerisation bei 30°C durch Zugabe von 0,5 mmol sec.-Butyllithium gestartet. Die Temperatur der Reaktionsmischung wurde auf 60°C einreguliert und die Mischung für 1 h bei dieser Temperatur belassen. Zum Abbruch der Reaktion wurde iso-Propanol im Überschuß (10 ml) gegeben. Die disperse Mischung wurde abfiltriert und im Vakuumtrockenschrank bei 65°C für 12 h getrocknet. Umsatz über 99 %; $M_w$ = 2 362 000; $M_w/M_n$ = 2,5 - vgl. Fig. 1. Teilchengröße: ca. 16 μm; das getrocknete Produkt wurde zur Vorbereitung der mechanischen Untersuchung in üblicher Weise extrudiert und granuliert.

Beispiel 2

30,7 g Nippon NS 312 wurden unter Inertgas in 1228,5 g Styrol gelöst und in 1843 g n-Hexan eingerührt. Als Indikator wurden 0,5 ml 1,1-Diphenylethylen zugesetzt. Alle Verunreinigungen wurden mit sec.-Butyllithium austitriert und die Polymerisation bei 30°C durch Zugabe von 1,22 mmol sec.-Butyllithium gestartet. Dann wurde verfahren wie vorstehend beschrieben. Erhaltene Daten: Umsatz > 99 %; $M_w$ = 1 080 000; $M_w/M_n$ = 1,4 - vgl. Fig. 2. Teilchengröße: ca. 6,5 μm.

Beispiel 3

25,0 g Nippon NS 312 wurden unter Inertgas in 1001 g Styrol gelöst und diese Mischung wurde anschließend in 1859 g n-Hexan eingerührt. Alle Verunreinigungen wurden mit sec.-Butyllithium austitriert und anschließend wurde die Polymerisation bei 30°C durch Zugabe von 0,50 mmol in Form einer 1,4 molaren sec.-Butyllithium-Lösung gestartet. Dann wurde verfahren wie vorstehend beschrieben. Erhaltene Daten: Umsatz: > 99 %; $M_w$ = 347 900 $M_w/M_n$ = 2,4 - vgl. Fig. 3. Teilchengröße: ca. 8,0 μm.

Untersuchung der Eigenschaften

Aus handelsüblichen Polystyrolgranulaten mit jeweils unterschiedlichem Molekulargewicht sowie erfindungsgemäßem Polystyrol (Beispiel 3) wurden CT-Probekörper nach ASTM E399 (W = 50 mm, Dicke = 4 mm) hergestellt. In die Probekörper wurde bei einer Frequenz von 10 Hz in der Ebene der Rißstarterkerbe ein Ermüdungsanriß eingebracht. Für die Länge der Rißstarterkerbe a gilt die Beziehung 0,45 < a/W < 0,55. Die Messungen wurden mit einer Spindelzugprüfmaschine bei 23°C/50 % rel. Feuchte durchgeführt. Der CT-Probekörper wurde mit einer Abzugsgeschwindigkeit von 10 mm/min auf Zug bis zum Bruch belastet. Die Messungen wurden nach dem Protokoll der "EGF Task Group on Polymers and Composites in Linear Elastic Fracture Mechanics (LEFM) Standard for Determining $K_c$ and $G_c$ for Plastics" von 11/87" durchgeführt. Die Rißöffnung wurde mit einem Rißöffnungsaufnehmer gemessen, der symmetrisch zur Rißebene an der Stirnfläche des CT-Probekörpers befestigt war. Für die Bestimmung des E-Moduls wurde die Nachgiebigkeit des Probekörpers zwischen 30 % und 70 % der Maximalkraft aus dem Kraft-Rißöffnungsdiagramm bestimmt. Die Berechnung erfolgte nach den Gleichungen von Saxena und Hudak in: Review and Extension of Compliance Information for Common Crack Growth Specimens; Journal of Fracture, Vol. 14, No. 5, October 1979, p. 453-467. Mit Hilfe des Spannungsintensitätsfaktors $K_{IC}$ und des E-Moduls kann die Energiefreisetzungsrate $G_{IC}$

berechnet werden:

$$G_{IC} = \frac{K_{IC}^2}{E}$$

Die Ergebnisse sind in Tabelle 1 dargestellt. Die PS-Proben mit dem Molekulargewicht 610.000 und 1.347.900 besitzen eine deutlich höhere Bruchzähigkeit als eine Standardprobe.

Tabelle 1

| $K_{IC}$-Werte von PS-Proben mit unterschiedlichem Molekulargewicht | | | | | | |
|---|---|---|---|---|---|---|
|  | PS 2608 | PS 148H | PS 2601 | PS 168N | PS R2/912 | Beisp. 3 |
| Mw | 194.000 | 238.000 | 302.000 | 359.000 | 610.000 | 1.347.900 |
| $K_{IC}$ [MPa√m] | 1,77 | 1,95 | 2,04 | 2,5 | 3,31 | --- |
| $G_{IC}$ [J/m$^2$] | 901 | 1075 | 1094 | 1891 | 1464 | 2612 |

Aus den gleichen Polystyrolgranulaten wie vorstehend mit jeweils unterschiedlichem Molekulargewicht wurden, wie im Beispiel 2 beschrieben, CT-Probekörper nach ASTM E399 (W = 50 mm, Dicke = 4 mm) hergestellt. In die Probekörper wurde bei einer Frequenz von 10 Hz in der Ebene der Rißstarterkerbe ein Ermüdungsanriß eingebracht. Für die Länge der Rißstarterkerbe a gilt die Beziehung 0,45 < a/W y 0,55. Für die verschiedenen Polystyroltypen wurde je ein Ermüdungsrißausbreitungsdiagramm mit der Hilfe einer servohydraulischen Prüfmaschine gemessen.

Bruchmechanisch wird bei einem Ermüdungsrißausbreitungsexperiment die effektive, den Riß vorantreibende Belastung an der Rißspitze als Amplitude der Spannungsintensität ΔK gemessen. Zum Beispiel führt eine wechselnde periodische Belastung mit einer Kraftamplitude ΔP = 90 N und einem Spannungsverhältnis R = 0,1 an der Spitze eines mit einem 20 mm langen Anriß versehenen CT-Probekörpers zu einer Amplitude des Spannungsintensitätsfaktors ΔK = 0,74 MPΔm. Die Rißverlängerungsrate da/dN (a = Rißlänge, N = Schwingungsspielzahl) eines Ermüdungsrisses wird indirekt durch Zunahme der Nachgiebigkeit der Probe bei Rißwachstum in Abhängigkeit von der Schwingspielzahl mit einem an der Frontseite der Probe befestigten Rißöffnungsaufnehmer kontinuierlich gemessen. Die in der Abbildung in einem Ermüdungsrißausbreitungsdiagramm (Mode I fatigue crack growth rate) dargestellten Ergebnisse zeigen, daß die Polystyroltypen mit einem Molekulargewicht > 600.000 ein deutlich besseres Ermüdungsrißausbreitungsverhalten zeigen. Dies kommt dadurch zum Ausdruck, daß die Rißausbreitungsdiagramme dieser Werkstoffe deutlich nach rechts verschoben sind und sowohl höhere $\Delta K_{th}$ - wie auch höhere $\Delta K_{max}$-Werte aufweisen.

Tabelle 2

| $\Delta K_{th}$ und $\Delta K_{max}$-Werte von PS-Proben mit unterschiedlichem Molekulargewicht | | | | | | |
|---|---|---|---|---|---|---|
|  | PS 2608 | PS 148H | PS 2601 | PS 168N | PS R2/912 | Beisp. 3 |
| $M_w$ | 194.000 | 238.000 | 302.000 | 359.000 | 610.000 | 1.347.900 |
| ΔKth [MPa√m] | 0,16 | 0,18 | 0,21 | 0,30 | 0,42 | 0,67 |
| $\Delta K_{max}$ | 0,63 | 0,51 | 0,74 | 0,71 | 2,50 | 3,47 |

**Patentansprüche**

1.    Verfahren zur Herstellung von Polystyrol durch anionische Polymerisation in nichtwäßriger Dispersion, dadurch gekennzeichnet, daß man die anionische Polymerisation in einem aliphatischen Kohlenwasserstoff als Dispergiermittel und mit einem Styrol-Butadien-Blockcopolymer als Dispergierhilfsmittel vornimmt und Polystyrol mit einem Molekulargewicht oberhalb von 1,000,000 herstellt.

2.    Verfahren nach Anspruch 1, dadurch gekennzeichnet, daß man als Styrol-Butadien-Blockcopolymer ein Styrol-Butadien-Zwei-blockcopolymer, das hydriert sein kann, in einer Menge von 1 bis 10 Gew.%, bezogen auf das Monomere (Styrol) verwendet.

3.    Verfahren nach Anspruch 1, dadurch gekennzeichnet, daß man als Dispergiermittel einen aliphatischen Kohlenwasserstoff mit 5 bis 8 C-Atomen verwendet.

4.  Verfahren nach Anspruch 1, dadurch gekennzeichnet, daß man Pentan, n-Hexan oder ein Kohlenwasserstoffgemisch mit 5 bis 8 C-Atomen verwendet.

5.  Verfahren nach Anspruch 1, dadurch gekennzeichnet, daß die Polymerisationstemperatur 50 bis 100°C beträgt.

6.  Verfahren nach Anspruch 1, dadurch gekennzeichnet, daß eine 20 bis 60 %ige Dispersion eingesetzt wird.

**Revendications**

1.  Procédé pour la préparation de polystyrène par polymérisation anionique en dispersion non aqueuse, caractérisé en ce qu'on procède à la polymérisation anionique dans un hydrocarbure aliphatique à titre d'agent de mise en dispersion et avec un copolymère séquencé de styrène-butadiène à titre d'adjuvant de mise en dispersion, et on prépare du polystyrène possédant un poids moléculaire supérieur à 1.000.000.

2.  Procédé selon la revendication 1, caractérisé en ce qu'on utilise, à titre de copolymère séquencé de styrène-butadiène, un copolymère biséquencé de styrène-butadiène qui peut être hydrogéné, en une quantité de 1 à 10% en poids rapportés au monomère (styrène).

3.  Procédé selon la revendication 1, caractérisé en ce qu'on utilise, à titre d'agent de mise en dispersion, un hydrocarbure aliphatique contenant de 5 à 8 atomes de carbone.

4.  Procédé selon la revendication 1, caractérisé en ce qu'on utilise le pentane, le n-hexane ou un mélange d'hydrocarbures contenant de 5 à 8 atomes de carbone.

5.  Procédé selon la revendication 1, caractérisé en ce que la température de polymérisation s'élève de 50 à 100°C.

6.  Procédé selon la revendication 1, caractérisé en ce qu'on met en oeuvre une dispersion à raison de 20 à 60%.

**Claims**

1.  A process for preparing polystyrene by anionic polymerization in nonaqueous dispersion, which comprises carrying out the anionic polymerization in an aliphatic hydrocarbon as dispersion medium and using a styrene-butadiene block copolymer as dispersant and preparing polystyrene having a molecular weight above 1,000,000.

2.  A process as claimed in claim 1, wherein the styrene-butadiene block copolymer is a styrene-butadiene two-block copolymer which can be hydrogenated and is used in an amount of from 1 to 10% by weight, based on the monomer (styrene).

3.  A process as claimed in claim 1, wherein the dispersant used is an aliphatic hydrocarbon having from 5 to 8 carbon atoms.

4.  A process as claimed in claim 1, wherein pentane, n-hexane or a hydrocarbon mixture having from 5 to 8 carbon atoms is used.

5.  A process as claimed in claim 1, wherein the polymerization temperature is from 50 to 100°C.

6.  A process as claimed in claim 1, wherein a from 20 to 60% strength dispersion is used.